# EUROPÄISCHE PATENTANMELDUNG

(11) **EP 4 660 492 A1**
(43) Veröffentlichungstag der Anmeldung: **10.12.2025**
(21) Anmeldenummer: 25178698.4
(22) Anmeldetag: 26.05.2025
(51) Int. Cl.: F16K 7/12

(54) **VENTILMEMBRAN FÜR MEMBRANVENTIL UND MEMBRANVENTIL**

(30) Priorität: 08.06.2024 DE 102024116047
(71) Anmelder: GEMÜ Gebr. Müller Apparatebau GmbH & Co. Kommanditgesellschaft, 74653 Ingelfingen (DE)
(72) Erfinder: Haidt, Harald, 74613 Öhringen (DE)
(74) Vertreter: DREISS Patentanwälte PartG mbB

(57) **Zusammenfassung**

Es wird eine mehrteilige Ventilmembran (2) für ein Membranventil (4) offenbart, wobei die Ventilmembran (2) wenigstens eine medienseitige Komponente (100) und eine trockenseitige Komponente (200) umfasst, wobei wenigstens eine Lasche (6a, 6b) lateral von der Ventilmembran (2) abragt, wobei die wenigstens eine Lasche (6a, 6b) wenigstens einen ersten Laschenabschnitt (110a, 110b) der medienseitigen Komponente (100) und wenigstens einen zweiten Laschenabschnitt (210a, 210b) der trockenseitigen Komponente (200) umfasst, und wobei der wenigstens eine zweite Laschenabschnitt (210a, 210b) der trockenseitigen Komponente (200) zumindest abschnittsweise gegenüber dem wenigstens einen ersten Laschenabschnitt (110a, 110b) der medienseitigen Komponente (100) zurückspringt.

## Beschreibung

Die Erfindung betrifft eine Ventilmembran für ein Membranventil und ein Membranventil.

Membranventile im Bereich der Prozesstechnik sind hinlänglich bekannt. Auf einer von der Ventilmembran abragenden Lasche werden Informationen für das Betriebspersonal der Prozessanlage angeordnet.

Hier besteht das Problem, dass zunehmend mehr Informationen auf der Lasche abgebildet werden müssen. Gleichzeitig ist der Bauraum hierfür begrenzt.

Die der Erfindung zugrundeliegenden Probleme werden durch ein Membranventil gemäß dem Anspruch 1 sowie durch ein Membranventil gemäß einem weiteren Anspruch gelöst. Vorteilhafte Weiterbildungen finden sich in den Unteransprüchen und ferner in der nachfolgenden Beschreibung von Ausführungsbeispielen.

Ein Aspekt der Beschreibung betrifft eine mehrteilige Ventilmembran für ein Membranventil, wobei die Ventilmembran wenigstens eine medienseitige Komponente und eine trockenseitige Komponente umfasst, wobei wenigstens eine Lasche lateral von der Ventilmembran abragt, wobei die wenigstens eine Lasche wenigstens einen ersten Laschenabschnitt der medienseitigen Komponente und wenigstens einen zweiten Laschenabschnitt der trockenseitigen Komponente umfasst, und wobei der wenigstens eine zweite Laschenabschnitt der trockenseitigen Komponente zumindest abschnittsweise gegenüber dem wenigstens einen ersten Laschenabschnitt der medienseitigen Komponente zurückspringt.

Vorteilhaft legt die trockenseitige Komponente mit ihrem zweiten Laschenabschnitt damit einen Bereich des ersten Laschenabschnitts frei bzw. gibt diesen frei.

Dieser Bereich des ersten Laschenabschnitts ist für den Monteur bei Montage, Demontage und vom Betriebspersonal der Prozessanlage je nach Einbaulage des Membranventils einsehbar und kann deshalb mit den die Ventilmembran, insbesondere die medienseitige Komponente betreffenden Informationen versehen werden. Zudem ist der freigelegte Bereich auch mittels eines digitalen Auslesemittels, beispielsweise eines Auslesestifts zum Auslesen eines in diesem Bereich angeordneten Transponders erreichbar.

Zudem lässt sich durch die gestufte Ausführung der Lasche auch eine Information oder ein Transponder im Bereich des zweiten Laschenabschnitts anbringen.

Vorteilhaft lässt sich durch die zueinander versetzt angeordneten Laschenabschnitte die Laschengröße verkleinern und gleichwohl wird der Platz für die notwendige Informationsabbildung und Transponderanordnung bereitgestellt.

Ein vorteilhaftes Beispiel zeichnet sich dadurch aus, dass der wenigstens eine zweite Laschenabschnitt in oder parallel zu einer gedachten Membranebene einen Vorsprung und einen Rücksprung umfasst.

Durch die gestufte Ausführung wird im Bereich des Rücksprungs der für ein optisch erkennbares Identifikationsmerkmal und/oder für eine transpondermäßige Erkennung verfügbare Platz auf dem wenigstens einen ersten Laschenabschnitt vergrößert.

Ein vorteilhaftes Beispiel zeichnet sich dadurch aus, dass der erste Laschenabschnitt einen Transponder umfasst.

Vorteilhaft ist mittels des Transponders die medienberührte Komponente drahtlos und eindeutig identifizierbar und damit nachverfolgbar.

Ein vorteilhaftes Beispiel zeichnet sich dadurch aus, dass der Transponder in einem von dem zweiten Laschenabschnitt nicht überdeckten Bereich, angeordnet ist.

Vorteilhaft ist der am ersten Laschenabschnitt angeordnete Transponder damit platzsparend in dem nicht überdeckten Bereich angeordnet.

Ein vorteilhaftes Beispiel zeichnet sich dadurch aus, dass der Transponder zumindest abschnittsweise innerhalb einer Ausnehmung des zweiten Laschenabschnitts, welche durch den Rücksprung bereitgestellt wird, angeordnet ist.

Vorteilhaft springt im Bereich der Ausnehmung des zweiten Laschenabschnitts der Laschenabschnitt soweit zurück, dass dort der Transponder zumindest abschnittsweise angeordnet sein kann.

Dadurch kann die Lasche insgesamt so klein ausfallen, dass nicht unnötig Platz für diese verschwendet wird. Auf der anderen Seite ist noch genügend Platz auf der Lasche vorhanden, um die Informationen für das Wartungspersonal bereitzustellen.

Ein vorteilhaftes Beispiel zeichnet sich dadurch aus, dass wenigstens eine weitere Lasche lateral von der Ventilmembran abragt, wobei die wenigstens eine weitere Lasche lateral von der Ventilmembran abragt, wobei die wenigstens eine weitere Lasche einen weiteren ersten Laschenabschnitt der medienseitigen Komponente und einen weiteren zweiten Laschenabschnitt der trockenseitigen Komponente umfasst, wobei der weitere zweite Laschenabschnitt der trockenseitigen Komponente zumindest abschnittsweise gegenüber dem weiteren ersten Laschenabschnitt der medienseitigen Komponente zurückspringt.

Durch die weitere Lasche ergeben sich weitere Freiheitsgrade für die Kennzeichnung der Ventilmembran und/oder deren Komponenten.

Ein vorteilhaftes Beispiel zeichnet sich dadurch aus, dass der weitere zweite Laschenabschnitt einen weiteren Transponder umfasst.

Vorteilhaft ist mittels des weiteren Transponders die trockenseitige Komponente drahtlos und eindeutig identifizierbar und damit nachverfolgbar.

Durch die Anordnung des weiteren Transponders an der weiteren Lasche ist dieser von dem ersten Transponder an dem ersten Laschenabschnitt entfernt angeordnet, womit für das Wartungspersonal eindeutig die jeweilige Komponente der Ventilmembran identifizierbar ist und damit auch eine Verwechslungsgefahr insbesondere beim Auslesen der Transponderkennung verhindert wird.

Ein vorteilhaftes Beispiel zeichnet sich dadurch aus, dass wenigstens eine erste optisch erkennbare Identifikationskennung auf einer von einer Nassseite der Ventilmembran abgewandten Oberfläche des ersten Laschenabschnitts angeordnet ist, wobei wenigstens eine zweite optisch erkennbare Identifikationskennung auf einer von der Nassseite der Ventilmembran abgewandten Oberfläche des zweiten Laschenabschnitts angeordnet ist.

Vorteilhaft lässt sich die jeweilige Identifikationskennung an diesen Oberflächen nicht nur einfach anbringen. Ein weiterer Vorteil liegt in der einfachen Zugänglichkeit und damit der Ablesbarkeit der Identifikationskennungen aus der typischen Montagesicht auf das Prozessventil bzw. Membranventil.

Ein vorteilhaftes Beispiel zeichnet sich dadurch aus, dass die erste Identifikationskennung ein Material der nassseitigen Komponente identifiziert, wobei die zweite Identifikationskennung ein Material der trockenseitigen Komponente identifiziert.

Vorteilhaft sind damit die verwendeten Materialien für die jeweilige Komponente an der kombinierten Lasche erkennbar.

Ein vorteilhaftes Beispiel zeichnet sich dadurch aus, dass eine Dicke des wenigstens einen zweiten Laschenabschnitts zumindest doppelt so groß, insbesondere zumindest dreimal so groß ist wie die Dicke des zugeordneten ersten Laschenabschnitts.

Vorteilhaft kann ein Prozessventil verwendet werden, welches sowohl eine Abdichtung der Lasche dieser mehrteiligen Ventilmembran ermöglicht als auch eine Kompatibilität mit einteiligen Ventilmembranen, beispielsweise aus EPDM, ermöglicht.

Ein vorteilhaftes Beispiel zeichnet sich dadurch aus, dass wenigstens eine erste Kontur der ersten Komponente, insbesondere des wenigstens einen ersten Laschenabschnitts, und eine zweite Kontur der zweiten Komponente, insbesondere des wenigstens einen zweiten Laschenabschnitts, durch einen Formschluss derart ineinandergreifen, dass eine Rotation der ersten Komponente zur zweiten Komponente um eine gedachte Stellachse begrenzt ist.

Vorteilhaft sind die beiden Komponenten damit zueinander festgelegt.

Ein vorteilhaftes Beispiel zeichnet sich dadurch aus, dass ein Ventilstift entlang der gedachten Stellachse von der ersten Komponente durch eine Durchgangsöffnung der zweiten Komponente geführt von der Trockenseite der Ventilmembran abragt.

Ein zweiter Aspekt der Beschreibung betrifft ein Membranventil umfassend die Ventilmembran gemäß dem ersten Aspekt, wobei die Ventilmembran zwischen einem Ventilkörper und einer antriebsseitigen Komponente des Membranventils verspannt ist.

Ein vorteilhaftes Beispiel zeichnet sich dadurch aus, dass die antriebsseitige Komponente, insbesondere ein Befestigungsflansch, wenigstens einen Rücksprung umfasst, welcher die wenigstens eine Lasche zumindest abschnittsweise freilegt.

In der Zeichnung zeigen:
- Fig. 1: eine Ventilmembran in perspektivischer Ansicht;
- Fig. 2: eine medienseitige Komponente der Ventilmembran;
- Fig. 3: ein Membranventil mit einer sichtbaren ersten Lasche der Ventilmembran in perspektivischer Draufsicht von der Montageseite des Membranventils ausgehend;
- Fig. 4: eine sichtbare zweite Lasche der Ventilmembran im in dem Membranventil verbauten Zustand;
- Fig. 5: einen Schnitt durch die erste Lasche;
- Fig. 6: das Membranventil in einer perspektivischen Gesamtansicht.

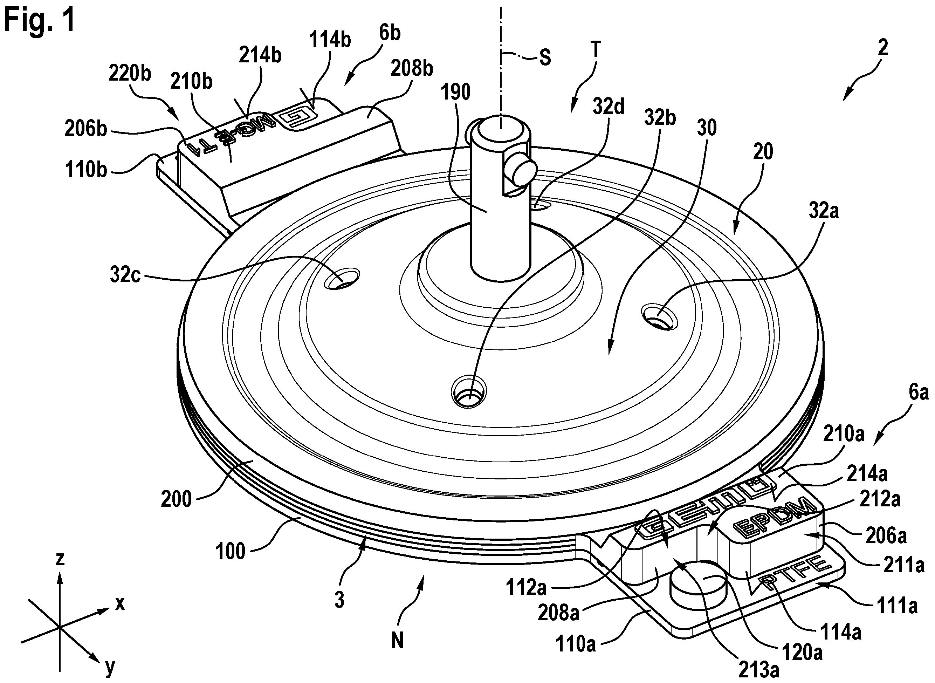

Figur 1 zeigt eine Ventilmembran 2 eines Prozessventils, welches ein Membranventil ist. Eine nassseitige Komponente 100 der Ventilmembran 2 ist zumindest abschnittsweise von einer trockenseitigen Komponente 200 überdeckt. Selbstverständlich können noch weitere Komponenten Teil der Ventilmembran 2 sein.

Die nassseitige Komponente 100 wird auch als Membranschild bezeichnet und ist mit ihrer nassseitigen Oberfläche für einen Kontakt mit dem Prozessfluid ausgebildet. Die trockenseitige Komponente 200 wird auch als Membranrücken bezeichnet und ist durch deren elastische Eigenschaften dazu eingerichtet, sowohl die Dichtwirkung über einen Ventilsitz als auch die Dichtheit nach außen über einen Verspannbereich 20 bereitzustellen.

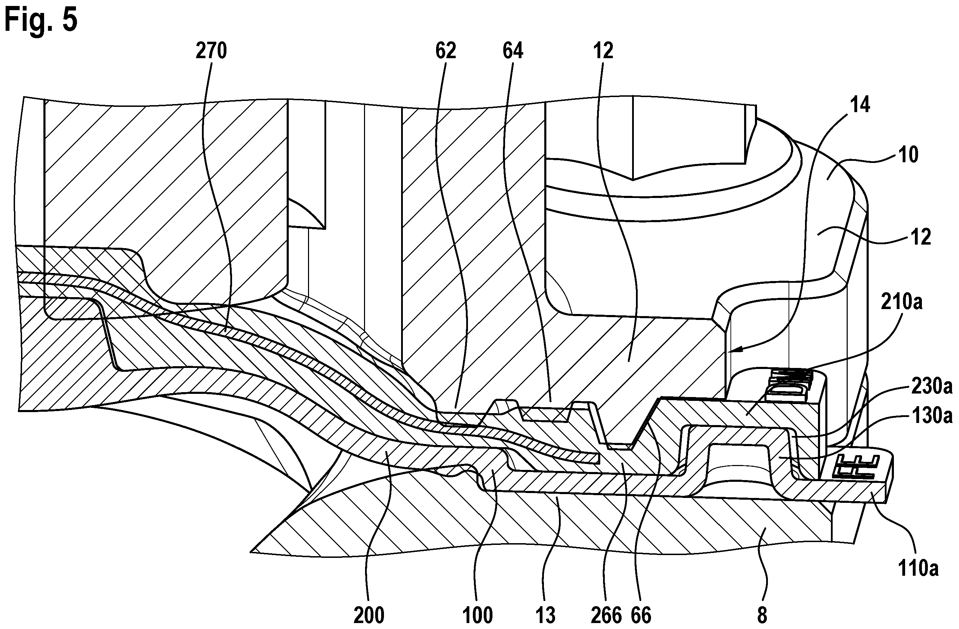

Der kreisringförmige Verspannbereich 20 erstreckt sich beispielsweise vom lateralen Rand der Ventilmembran 2 radial nach innen bis zu einem Funktionsbereich 30. Die kreisförmige Grenze zwischen dem Verspannbereich 20 und dem Funktionsbereich 30 verläuft beispielsweise im Bereich eines in Figur 5 gezeigten Vorsprungs 62, der die trockenseitige Komponente 200 kontaktiert.

Die mehrteilige Membran 2 weist also den Verspannbereich 20 und den innerhalb des Verspannbereichs 20 angeordneten Funktionsbereich 30 auf. Zwischen zwei Befestigungsflanschen des Membranventils wird der Verspannbereich 20 verklemmt, um die Dichtheit nach außen zu gewährleisten. Im geöffnetem Zustand des Membranventils gibt die Ventilmembran 2 gemeinsam mit dem Ventilsitz des Ventilkörpers einen Fluidkanal zum Fließen des Prozessfluids frei. Der Fluidkanal wird dadurch geschlossen, dass ein nicht gezeigtes Druckstück auf die Trockenseite T der Ventilmembran 2 gedrückt wird und damit die nassseitige Komponente 100 auf den Ventilsitz drückt.

Die zweite Komponente 200 umfasst im Funktionsbereich 30 vorliegend eine Anzahl von vier Durchgangsöffnungen 32a-d. Die Durchgangsöffnungen 32a-d ermöglichen es, dass ein Riss oder eine Beschädigung der ersten Komponente 100 dazu führt, dass das durch die erste Komponente 100 tretende Prozessfluid auf die Trockenseite T gelangen und diese Leckage auf der Trockenseite T detektiert werden kann.

Ein Ventilstift 190 verläuft entlang einer gedachten Stellachse S und ist ausgehend von der ersten Komponente 100, zu der der Ventilstift 190 festgelegt ist, durch eine zentrale Durchgangsöffnung der zweiten Komponente 200 geführt. Von der Trockenseite T der Ventilmembran 2 ragt der Ventilstift 190 ab. Der Ventilstift 190 dient dazu, die Ventilmembran 2 durch Einbringen einer Zugkraft in den Ventilstift 190 von dem Ventilsitz abzuheben.

Eine erste Lasche 6a ragt lateral von der Ventilmembran 2 ab. Die Lasche 6a wird durch die medienseitige Komponente 100 und die trockenseitige Komponente 200 gebildet. Ein erster Laschenabschnitt 110a der ersten Komponente 100 springt in einer gedachten Ebene, in welcher die Stellachse S liegt, oder in einer gedachten Parallelebene gegenüber einem zweiten Laschenabschnitt 210a hervor. So verläuft eine äußere Fläche 111a des ersten Laschenabschnitts 110a nach außen versetzt im Vergleich zu einer äußeren Fläche 211a des zweiten Laschenabschnitts 210a. Die erste Lasche 6a ist ein Vorsprung und ragt über eine Schmalseite 3 der Ventilmembran 2 hinaus.

Eine weitere äußere Fläche 213a des zweiten Laschenabschnitts 210a ist gegenüber der äußeren Fläche 211a nach innen versetzt. Damit bildet der zweite Laschenabschnitt einen Vorsprung 206a und einen Rücksprung 208a aus. Die Flächen 111a, 211a und 213a verlaufen im gezeigten Beispiel jeweils parallel zur Stellachse S. In einem nicht gezeigten Beispiel verläuft wenigstens eine Fläche 111a, 211a, und 213a schräg zur Stellachse S, wobei die zugeordnete Oberfläche in Richtung Antrieb orientiert ist.

Ein Transponder 120a ist mit dem ersten Laschenabschnitt 110a verbunden. Der Transponder 120a umfasst ein Transpondergehäuse und einen in dem Transpondergehäuse angeordneten Mikrochip mit einem Datenspeicher und einer Antenne. Der Mikrochip umfasst beispielsweise einen RFID-Schaltkreis (RFID: Radio Frequency Identification).

Auf dem Datenspeicher des Transponders 120a ist beispielsweise eine Identifikationskennung für die erste Komponente 100 abgespeichert. Die Identifikationskennung ist mittels eines Lesegeräts über die Antenne auslesbar und dient der Nachverfolgung der ersten Komponente 100 in einem nachgelagerten digitalen Membran-Management-System.

Der Transponder 120a ist nicht zerstörungsfrei von dem ersten Laschenabschnitt 110a entfernbar. Beispielsweise ist das Transpondergehäuse des Transponders 120a durch eine Heißverstemmung eines Abschnitts in einer Durchgangsöffnung des Laschenabschnitts 110a in alle Richtungen formschlüssig mit dem Laschenabschnitt 110a verbunden.

In einer nicht gezeigten Detailausführung ist der Rücksprung 208 nicht vorhanden, wobei der Transponder 120a mit dem gegenüber dem zweiten Laschenabschnitt 210a vorspringenden ersten Laschenabschnitt 110a verbunden ist.

Der Transponder 120a ragt in einen von dem zweiten Laschenabschnitt 210a nicht überdeckten Bereich 112a hinein. Damit ist der Transponder 120a zumindest abschnittsweise innerhalb einer Ausnehmung 212a des zweiten Laschenabschnitts 210a, welcher durch den Rücksprung 208a bereitgestellt wird, angeordnet.

Auf der Trockenseite T des ersten Laschenabschnitts 110a, einer Oberfläche 114a, ist eine erste Identifikationskennung "PTFE" im Material eingebracht, welche das Material "Polytetrafluorethylen" der ersten Komponente 100 der Ventilmembran 2 identifiziert.

Auf der Trockenseite T des Vorsprungs 206a, einer Oberfläche 214a, ist eine zweite Identifikationskennung "EPDM" im Material eingebracht, welche das Material Ethylen-Propylen-Dien-Kautschuk der zweiten Komponente 200 identifiziert.

Die erste und die zweite Identifikationskennung können auch aufgedruckt sein oder aufgelasert sein. Die Identifikationskennungen sind optisch erkennbar.

Die Identifikationskennung auf dem Laschenabschnitt 110a ist vor dem Vorsprung 206a angeordnet, insbesondere zwischen dem Vorsprungs 206a und einer Außenkante des ersten Laschenabschnitts 110a angeordnet.

Eine Dicke des wenigstens einen zweiten Laschenabschnitts 210a ist zumindest doppelt so groß, insbesondere zumindest dreimal so groß ist wie die Dicke des zugeordneten ersten Laschenabschnitts 110a, 110b. Im Erscheinungsbild ergibt sich, dass der zweite Laschenabschnitt 210a gegenüber dem ersten Laschenabschnitt 110 a erhaben ist.

In einem nicht gezeigten Beispiel sind die beiden Laschenabschnitte 110a und 210a in sich überdeckenden Abschnitten nahezu gleich dick. In einem anderen nicht gezeigten Beispiel ist der Laschenabschnitt 110a dicker als der Laschenabschnitt 210a.

Eine weitere Lasche 6b ragt ebenfalls von der Schmalseite 3, und zwar auf der der Lasche 6a gegenüberliegenden Seite der Membran 2 von dieser ab. Selbstverständlich noch andere Ausführungen denkbar als eine 180°-Anordnung der beiden Laschen 6a, 6b.

Die Außenkonturen eines weiteren ersten Laschenabschnitts 110b und eines weiteren zweiten Laschenabschnitts 210b der weiteren Lasche 6b sind analog zu der ersten Lasche 6a ausgeführt, weshalb die obige Beschreibung zu einem großen Teil auch auf die weitere Lasche 6b anzuwenden ist, insbesondere die dortigen Merkmale mit den analogen Bezugszeichen mit Index b.

Insbesondere ist die weitere Lasche 6b mit ihren Außenkonturen in Bezug zur Stellachse S rotationssymmetrisch zur ersten Lasche 6b.

Im Unterschied zur ersten Lasche 6a trägt bei der zweiten Lasche 6b der weitere zweite Laschenabschnitt 210b einen weiteren Transponder 220b, der bis auf die dort hinterlegte Identifikationskennung und die Befestigung analog zu dem ersten Transponder 220a ausgebildet ist. Die in dem zweiten Transponder 220b hinterlegte Identifikationskennung identifiziert die zweite Komponente 200. Der Transponder 220b weist beispielsweise eine Widerhakenkonstruktion auf, welche in einen Vorsprung 206b eingedrückt ist und nicht zerstörungsfrei entfernbar ist.

Alternativ zu der erwähnten Widerhakenkonstruktion ist der Transponder 220b in eine vorgeformte Tasche, die in den weiteren zweiten Laschenabschnitt 210b eingebracht ist, eingelegt. Die Tasche ist beispielsweise mit einer Abdeckung verschlossen. Die Abdeckung ist beispielsweise mit dem angrenzenden Bereich des weiteren zweiten Laschenabschnitts 210b materialschlüssig und/oder kraftschlüssig und/oder formschlüssig verbunden. In einem weiteren alternativen Beispiel ist der Transponder 220b in das Material des weiteren zweiten Laschenabschnitts 210b eingebettet.

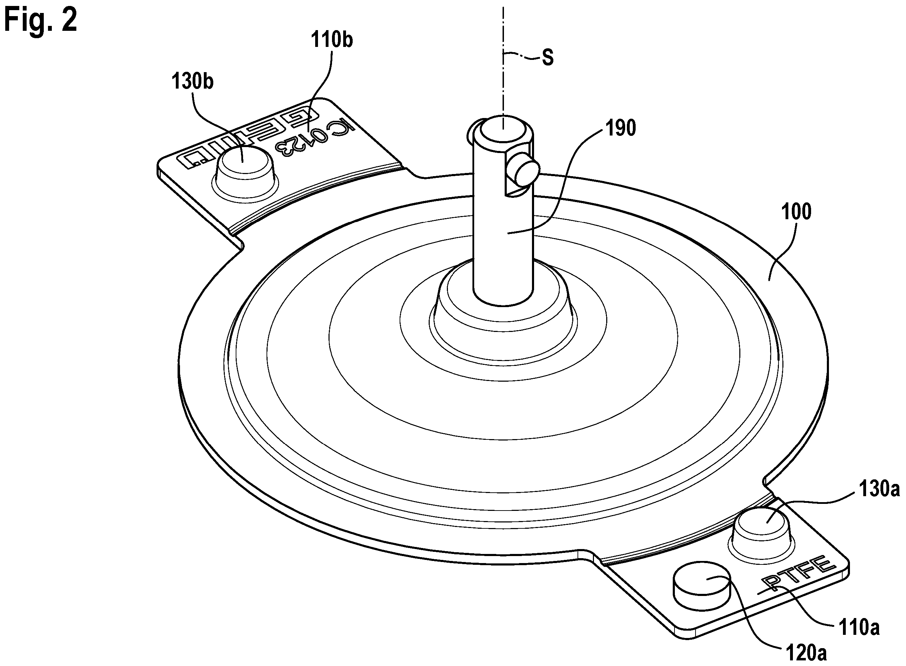

In der Figur 2 ist die erste Komponente 100 ohne die zweite Komponente dargestellt. Als parallel zur Stellachse S von den jeweiligen ersten Laschenabschnitten 110a, 110b abragender Vorsprung wird eine jeweilige erste Kontur 130a, 130b bezeichnet. Diese wird näher zur nachfolgenden Figur 5 erläutert.

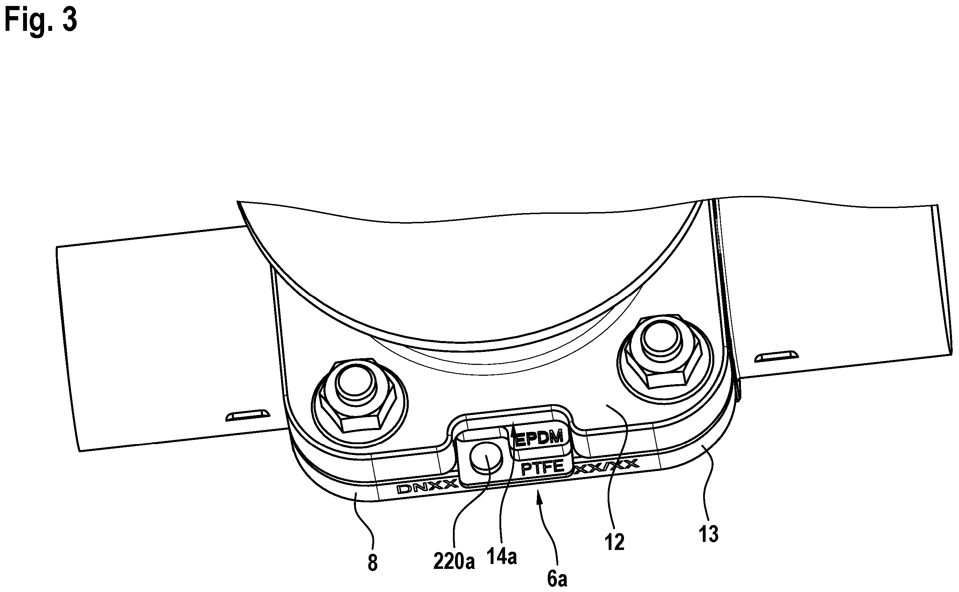

Figur 3 zeigt eine perspektivische Draufsicht auf die erste Lasche 6a in einem verbauten Zustand. Die Ventilmembran 2 ist zwischen einem antriebsseitigen Befestigungsflansch 12 und einem Befestigungsflansch 13 eines Ventilkörpers 8 verspannt. Der antriebseitige Befestigungsflansch 12 weist einen Rücksprung 14a auf, der die Sicht auf einen Teil der Lasche 6a der Ventilmembran freigibt.

In einem anderen nicht gezeigten Beispiel ragt die Lasche 6a gegenüber zueinander parallel abschließenden Befestigungsflanschen hervor.

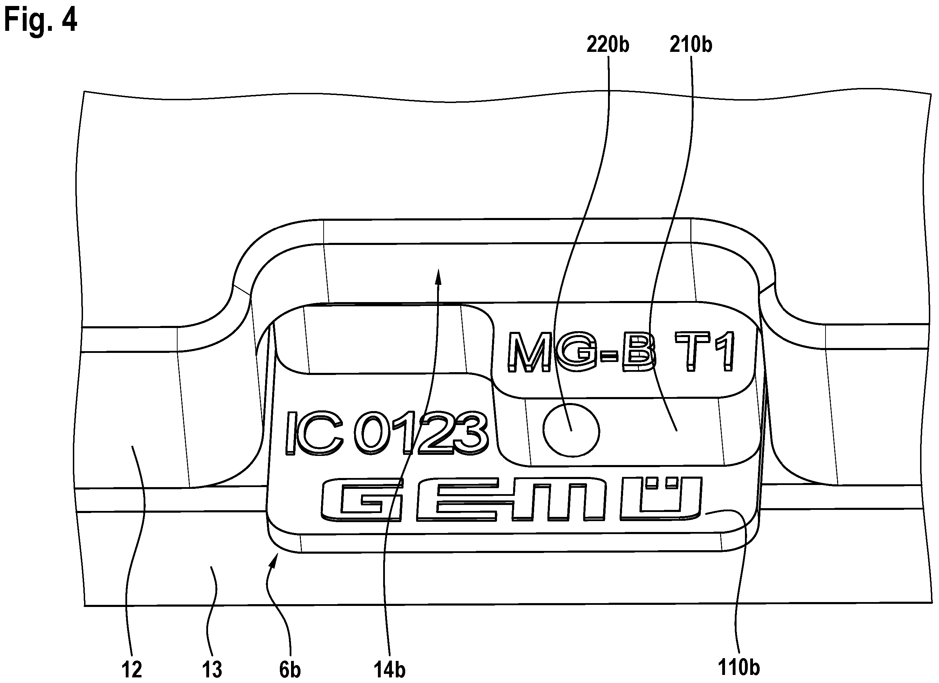

Figur 4 zeigt eine perspektivische Draufsicht auf die zweite Lasche 6b, die der ersten Lasche 6a gegenüberliegt. Auch hier ist ein Rücksprung 14b in den Befestigungsflansch 12 eingebracht, um den Blick auf die Informationen auf der Lasche 6b freizugeben und die Zugänglichkeit des weiteren Transponders 220b sicherzustellen.

Die zweite Lasche 6b trägt im Bereich des weiteren ersten Laschenabschnitts 110b eine Herstellerkennzeichnung. Der weitere zweite Laschenabschnitt 210b identifiziert die Größe der Ventilmembran 2.

Figur 5 zeigt einen perspektivischen Schnitt. Die erste Kontur 130a des ersten Laschenabschnitts 110a greift als Vorsprung in einen Rücksprung, also eine zweite Kontur 230a der zweiten Komponente 200, insbesondere des zweiten Laschenabschnitts 210a. Die ineinandergreifenden Konturen ergeben einen Formschluss in der gedachten Membranebene xy, wodurch ein Verdrehen der ersten und zweiten Komponente 100, 200 um die Stellachse S verhindert wird.

Der Befestigungsflansch 12 der antriebsseitigen Komponente 100 weist kreisringförmige Vorsprünge 62 und 64 auf, welche die Spannkraft in die zweite Komponente 200 einleiten und durch Weitergabe der Spannkraft an die erste Komponente 100 dazu führen, dass die erste Komponente 100 auf den Befestigungsflansch 13 des Ventilkörpers 8 gepresst wird und damit die Dichtheit nach außen sichergestellt wird. Ein Vorsprung 66 greift in eine Verjüngung 266 der ersten Komponente 100 ein.

Die zweite Komponente 200 weist eine innere Armierung 270, beispielsweise ein Gewebe auf. Die Armierung 270 erstreckt sich durch die zweite Komponente 200 bis zu der Verjüngung 266. Die Verjüngung 266 verbindet den Bereich der zweiten Komponente 200 mit der Armierung 270 und den zweiten Laschenabschnitt 210a miteinander.

In einem nicht gezeigten Beispiel entfällt die Armierung 270 innerhalb der zweiten Komponente 200.

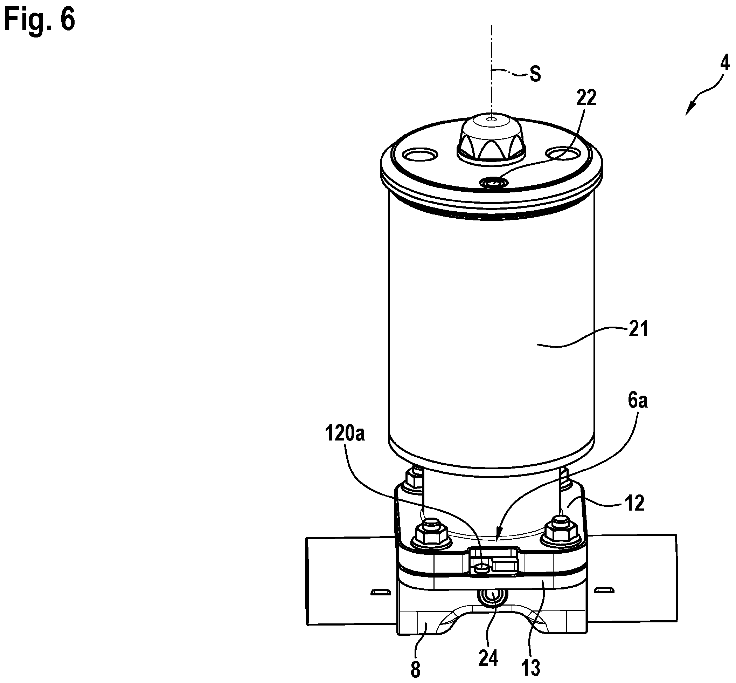

Figur 6 zeigt das Membranventil 4 in seinem zusammengebauten Zustand in einer perspektivischen Ansicht mit Blick auf die Lasche 6a.

Das Membranventil 4 umfasst den am wenigstens einen ersten Laschenabschnitt 110a der Ventilmembran angeordneten Transponder 120a, dessen Antennenstruktur zur Stellachse S lotrecht verläuft. Das Membranventil 4 umfasst einen Antrieb 21 mit einem weiteren Transponder 22, dessen Antennenstruktur zur Stellachse S lotrecht verläuft.

Die Montagesicht in Richtung des Ventilkörpers 8 profitiert von der Orientierung der Antennenstruktur und die Ausrichtung der zugänglichen Oberfläche der Transponder 120a und 22, wobei die jeweilige zugängliche Oberfläche weg vom Ventilkörper 8 weist.

Der Ventilkörper 8 des Membranventils 4 umfasst einen zusätzlichen Transponder 24, dessen Antennenstruktur im Wesentlichen parallel zur Stellachse S verläuft.

Die auslesbare Oberfläche des Transponders 24 weist zu der Seite des Membranventils 4, auf der auch die Transponder 120a und 22 angeordnet sind.

## Patentansprüche

1. Eine mehrteilige Ventilmembran (2) für ein Membranventil (4), wobei die Ventilmembran (2) wenigstens eine medienseitige Komponente (100) und eine trockenseitige Komponente (200) umfasst, wobei wenigstens eine Lasche (6a, 6b) lateral von der Ventilmembran (2) abragt, wobei die wenigstens eine Lasche (6a, 6b) wenigstens einen ersten Laschenabschnitt (110a, 110b) der medienseitigen Komponente (100) und wenigstens einen zweiten Laschenabschnitt (210a, 210b) der trockenseitigen Komponente (200) umfasst, und wobei der wenigstens eine zweite Laschenabschnitt (210a, 210b) der trockenseitigen Komponente (200) zumindest abschnittsweise gegenüber dem wenigstens einen ersten Laschenabschnitt (110a, 110b) der medienseitigen Komponente (100) zurückspringt.

2. Die Ventilmembran (2) gemäß dem Anspruch 1, wobei der wenigstens eine zweite Laschenabschnitt (210a, 210b) in oder parallel zu einer gedachten Membranebene (xy) einen Vorsprung (206a, 208b) und einen Rücksprung (208a, 208b) umfasst.

3. Die Ventilmembran (2) gemäß dem Anspruch 1 oder 2, wobei der erste und/oder zweite Laschenabschnitt (110a, 210b) einen Transponder (120a, 220b) umfasst.

4. Die Ventilmembran (2) gemäß dem Anspruch 3, wobei der Transponder (120a) in einem von dem zweiten Laschenabschnitt (210a) nicht überdeckten Bereich (112a) angeordnet ist.

5. Die Ventilmembran (2) gemäß einem der vorigen Ansprüche, wobei der Transponder (120a) zumindest abschnittsweise innerhalb einer Ausnehmung (212a) des zweiten Laschenabschnitts (210a), welche insbesondere durch den Rücksprung (208a) bereitgestellt wird, angeordnet ist.

6. Die Ventilmembran (2) gemäß einem der vorigen Ansprüche, wobei wenigstens eine weitere Lasche (6b) lateral von der Ventilmembran (2) abragt, wobei die wenigstens eine weitere Lasche (6b) lateral von der Ventilmembran (2) abragt, wobei die wenigstens eine weitere Lasche (6b) einen weiteren ersten Laschenabschnitt (110b) der medienseitigen Komponente (100) und einen weiteren zweiten Laschenabschnitt (210b) der trockenseitigen Komponente (200) umfasst, und wobei der weitere zweite Laschenabschnitt (210b) der trockenseitigen Komponente (200) zumindest abschnittsweise gegenüber dem weiteren ersten Laschenabschnitt (110b) der medienseitigen Komponente (100) zurückspringt.

7. Die Ventilmembran (2) gemäß dem Anspruch 6, wobei der weitere zweite Laschenabschnitt (110a) einen bzw. den weiteren Transponder (220b) umfasst.

8. Die Ventilmembran (2) gemäß einem der vorigen Ansprüche, wobei wenigstens eine erste optisch erkennbare Identifikationskennung auf einer von einer Nassseite (N) der Ventilmembran (2) abgewandten Oberfläche (114a, 114b) des ersten Laschenabschnitts (110a, 110b) angeordnet ist, und wobei wenigstens eine zweite optisch erkennbare Identifikationskennung auf einer von der Nassseite (N) der Ventilmembran (2) abgewandten Oberfläche (214a, 214b) des zweiten Laschenabschnitts (210a, 210b) angeordnet ist.

9. Die Ventilmembran (2) gemäß einem der vorigen Ansprüche, wobei die erste Identifikationskennung ein Material der nassseitigen Komponente (100) identifiziert, und wobei die zweite Identifikationskennung ein Material der trockenseitigen Komponente (200) identifiziert.

10. Die Ventilmembran (2) gemäß einem der vorigen Ansprüche, wobei eine Dicke des wenigstens einen zweiten Laschenabschnitts (210a, 210b) zumindest doppelt so groß, insbesondere zumindest dreimal so groß ist wie die Dicke des zugeordneten ersten Laschenabschnitts (110a, 110b).

11. Die Ventilmembran (2) gemäß einem der vorigen Ansprüche, wobei wenigstens eine erste Kontur (130a, 130b) der ersten Komponente (100), insbesondere des wenigstens einen ersten Laschenabschnitts (110a, 110b), und eine zweite Kontur (230a, 230b) der zweiten Komponente (200), insbesondere des wenigstens einen zweiten Laschenabschnitts (210a, 210b), durch einen Formschluss derart ineinandergreifen, dass eine Rotation der ersten Komponente (100) zur zweiten Komponente (200) um eine gedachte Stellachse (S) begrenzt ist.

12. Die Ventilmembran (2) gemäß einem der vorigen Ansprüche, wobei ein Ventilstift (190) entlang der gedachten Stellachse (S) von der ersten Komponente (100) durch eine Durchgangsöffnung der zweiten Komponente (200) geführt von der Trockenseite (T) der Ventilmembran (2) abragt.

13. Ein Membranventil (4) umfassend die Ventilmembran (2) gemäß einem der vorigen Ansprüche, wobei die Ventilmembran (2) zwischen einem Ventilkörper (8) und einer antriebsseitigen Komponente (10) des Membranventils (4) verspannt ist.

14. Das Membranventil (4) gemäß dem Anspruch 13, wobei die antriebsseitige Komponente (10), insbesondere ein Befestigungsflansch (12), wenigstens einen Rücksprung (14a, 14b) umfasst, welcher die wenigstens eine Lasche (6a, 6b) zumindest abschnittsweise freilegt.

15. Das Membranventil (4) gemäß Anspruch 13 oder 14 umfassend:
den am wenigstens einen ersten Laschenabschnitt (110a) angeordneten Transponder (120a), dessen Antennenstruktur zur Stellachse (S) lotrecht verläuft;
einen Antrieb (21) mit einem weiteren Transponder (22), dessen Antennenstruktur zur Stellachse (S) lotrecht verläuft; und insbesondere
den Ventilkörper (8) mit einem zusätzlichen Transponder (24), dessen Antennenstruktur im Wesentlichen parallel zur Stellachse (S) verläuft.
